# EUROPÄISCHE PATENTSCHRIFT

(11) **EP 3 132 170 B1**
(45) Veröffentlichungstag und Bekanntmachung des Hinweises auf die Patenterteilung: **06.06.2018**
(21) Anmeldenummer: 15722925.3
(22) Anmeldetag: 16.04.2015
(51) Int. Cl.: F16K 31/53, F16K 31/05, F16K 31/04

(54) **ARMATUREN-SCHALTVORRICHTUNG UND ARMATUREN-STELLANORDNUNG**
SWITCHING DEVICE AND ADJUSTING ARRANGEMENT FOR CONTROL DEVICES
DISPOSITIF DE COMMANDE D'ARMATURE ET ENSEMBLE DE COMMANDE D'ARMATURE

(30) Priorität: 16.04.2014 DE 102014005628
(43) Veröffentlichungstag der Anmeldung: 22.02.2017
(73) Patentinhaber: AUMA Riester GmbH & Co. KG, 79379 Müllheim (DE)
(72) Erfinder: PLATZER, Wilfried, 79100 Freiburg (DE); HOFMANN, Benjamin, 79423 Heitersheim (DE)
(74) Vertreter: Börjes-Pestalozza, Henrich
(86) Internationale Anmeldenummer: PCT/EP2015/000796
(87) Internationale Veröffentlichungsnummer: WO 2015/158433

(56) Entgegenhaltungen:
- EP-A2- 1 536 163
- US-A- 1 245 574
- US-A- 1 670 313

## Beschreibung

Die Erfindung betrifft eine Armaturen-Schaltvorrichtung, mit einer Abtriebswelle und einer an die Abtriebswelle gekoppelten Eingangswelle, über welche die Antriebswelle im Normalbetrieb antreibbar ist, und mit einem Not-Antrieb, wobei die Abtriebswelle zusätzlich durch den Not-Antrieb aus einer Gebrauchsposition in eine Endposition überführbar ist, wobei an einem von dem Not-Antrieb antreibbaren und/oder angetriebenen Element eine Ausnehmung ausgebildet ist und wobei ein Sperrelement mit einer Betätigungsvorrichtung von einer aus der Ausnehmung ausgerückten Position in eine in die Ausnehmung eingreifende Position bewegbar ist.

Die Erfindung betrifft weiter eine Armaturen-Stellanordnung mit einem Stellantrieb, wobei ein Abtrieb des Stellantriebs mit der Eingangswelle einer Armaturen-Schaltvorrichtung wirkverbunden ist.

Armaturen-Stellanordnungen sind bekannt und werden zur Betätigung von Armaturen beispielsweise in industriellen Anlagen eingesetzt. Die erwähnten Armaturen-Schaltvorrichtungen sind beispielsweise von technischen Systemen bekannt, in welchen ein Massenfluss mit Hilfe von Armaturen gesteuert oder geregelt wird. Hierbei werden die Armaturen im Normalbetrieb mit entsprechenden Stellantrieben betätigt. Bei einem Netzausfall, beispielsweise bei einem elektrischen Netzausfall oder bei einem Ausfall einer hydraulischen oder pneumatischen Versorgung der Stellantriebe, dienen die Armaturen-Schaltvorrichtungen dazu, die Abtriebswelle in eine vordefinierte Endposition zu überführen, um die jeweils angeschlossene Armatur in einen definierten Endzustand, beispielsweise einen geöffneten Zustand oder einen geschlossenen Zustand, zu überführen. Die Armaturen-Schaltvorrichtung schaltet hierzu bei Abweichungen vom Normalbetrieb in die vordefinierte Endposition. Da der definierte Endzustand der jeweils angeschlossenen Armatur in einem häufigen Anwendungsfall ein geschlossener Zustand ist, wird die Armaturen-Schaltvorrichtung auch als Armaturen-Schließvorrichtung bezeichnet.

Hierzu ist es üblich geworden, die Armaturen-Schaltvorrichtung mit einem Not-Antrieb auszurüsten, welcher außerhalb des Normalbetriebs für die Überführung der Abtriebswelle in die gewünschte Endposition sorgt. Um zu verhindern, dass der Not-Antrieb im Normalbetrieb in einen Kraftfluss zwischen der Eingangswelle und der Abtriebswelle eingreift, werden Arretierungsvorrichtungen eingesetzt, welche den Not-Antrieb im Normalbetrieb arretieren. Hierzu kann ein von dem Not-Antrieb antreibbares und/oder angetriebenes Element eine Ausnehmung aufweisen, in welche ein Sperrelement arretierend eingreift.

Aus EP 1 536 163 A2 ist ein Betätiger für ein drahtgeführtes automatisches Getriebe bekannt, bei welchem eine Spule eine Klaue beaufschlagt, wobei in der Spule eine interne Rückholfeder ausgebildet ist, um die Klaue in stromlosem Zustand auszurücken.

Aus US 1 670 313 A ist ein System einer Flüssigkeitsdrucksteuerung bekannt, bei welcher eine zwei Zähne aufweisende Klaue vorgesehen ist, welche mit einem Elektromagneten in eine Verzahnung eines Zahnrades einrückbar ist, wobei eine Rückholfeder zum Ausrücken der Klaue vorgesehen ist.

Der Erfindung liegt die Aufgabe zugrunde, eine einfach und zuverlässig arbeitende Armaturen-Schaltvorrichtung zu schaffen.

Zur Lösung dieser Aufgabe werden erfindungsgemäß die Merkmale von Anspruch 1 vorgeschlagen. Somit wird erfindungsgemäß zur Lösung der genannten Aufgabe bei einer Armaturen-Schaltvorrichtung der eingangs beschriebenen Art vorgeschlagen, dass die Ausnehmung wenigstens eine das Sperrelement beaufschlagende Schrägfläche aufweist und dass die wenigstens eine Schrägfläche so ausgerichtet ist, dass eine mit dem Not-Antrieb auf das Sperrelement in der eingreifenden Position einbringbare Kraft eine das Sperrelement aus der Ausnehmung ausrückende Komponente aufweist. Von Vorteil ist dabei, dass der Not-Antrieb die Arretierung selbsttätig aufheben kann, sobald die Betätigungsvorrichtung das Sperrelement freigibt. Fehlfunktionen der Armaturen-Schaltvorrichtung, bei denen aufgrund einer fehlerhaft nicht aufgehobenen Arretierung des Not-Antriebs außerhalb des Normalbetriebs dieser Not-Antrieb die Abtriebswelle nicht in die gewünschte Endposition überführen kann, sind somit vermeidbar. Die Armaturen-Schaltvorrichtung ist auf einfache Weise zuverlässiger ausgestaltbar, wodurch die gestellte Aufgabe gelöst wird.

Die Schrägfläche kann hierbei eben oder gekrümmt ausgebildet sein. Beispielsweise kann die Schrägfläche in einer Richtung oder in zwei Richtungen jeweils eine Gerade oder eine beliebige, beispielsweise gekrümmte, Kurvenform beschreiben. Beispielsweise kann die Schrägfläche als Teil einer Kegelsenkung ausgebildet sein. In diesem Fall beschreibt die Schrägfläche in einer Richtung, nämlich entlang einer Mantellinie eines Kegels der Kegelsenkung, eine Gerade und in einer Richtung senkrecht hierzu eine gekrümmte Kurve, in der Regel einen Kreis. Die Richtung der Komponente der einbringbaren Kraft ergibt sich aus einer (infinitesimalen) Ausrichtung der Schrägfläche an einem Punkt, an welchem das Sperrelement die Schrägfläche berührt. Dieser Punkt kann während des Ausrückens auf der Schrägfläche wandern, so dass sich zumindest bei nicht-ebenen, also in wenigstens einer Richtung gekrümmten, Schrägflächen die Richtung der Beaufschlagung ändern kann.

Besonders günstig ist es, wenn die Schrägfläche eine sich zum offenen Ende aufweitende Öffnung beschreibt. Somit ist ein einfaches Mittel gegeben, mit welchem das Sperrelement durch eine Bewegung des angetriebenen und/oder antreibbaren Elements aus der Ausnehmung heraustrennbarer ist.

Besonders günstig ist es, wenn zwei Schrägflächen, welche die erwähnte erfindungsgemäße Ausrückung für gegenläufige Richtungssinne einer Bewegung des Elements bewirken, gemeinsam die Öffnung definieren.

Bei einer Ausgestaltung der Erfindung kann vorgesehen sein, dass das antreibbare und/oder angetriebene Element ein rotierendes Element ist. Von Vorteil ist dabei, dass der Not-Antrieb direkt an einem Element im Kraftfluss zwischen dem Not-Antrieb und der Abtriebswelle arretierbar ist.

Bei einer Ausgestaltung der Erfindung kann vorgesehen sein, dass die Komponente in Bezug auf eine Drehachse des antreibbaren und/oder angetriebenen Elements radial ausgerichtet ist. Somit ist die Erfindung bei einer Armaturen-Schaltvorrichtung einsetzbar, bei welcher das Sperrelement mit einer radial ausgerichteten Bewegung in die Ausnehmung zur Arretierung eingreift.

Es kann beispielsweise vorgesehen sein, dass die Schrägfläche in Bezug auf eine Drehachse des antreibbaren oder angetriebenen Elements schräg und/oder in einem Winkel zu einer Radialrichtung ausgerichtet ist.

Alternativ kann vorgesehen sein, dass die Komponente in Bezug auf eine Drehachse des antreibbaren und/oder angetriebenen Elements axial ausgerichtet ist. Somit ist die Erfindung bei einer Armaturen-Schaltvorrichtung einsetzbar, bei welcher das Sperrelement mit einer axial ausgerichteten Bewegung in die Ausnehmung zur Arretierung eingreift. Von Vorteil ist dabei, dass die Betätigungsvorrichtung dichter an der Drehachse angeordnet werden kann. Somit ist ein Schwerpunkt der Armaturen-Schaltvorrichtung näher an der Drehachse ausbildbar. Hierdurch sind Montage- und/oder Handhabungseigenschaften der Armaturen-Schaltvorrichtung verbesserbar. Besonders günstig ist es, wenn die Betätigungsvorrichtung mit einer elektronischen Schaltung zur Ansteuerung in einem gemeinsamen Axialbereich, beispielsweise zwischen dem Not-Antrieb und einem, beispielsweise dem noch zu beschreibenden, Überlagerungsgetriebe, angeordnet ist.

Es kann beispielsweise vorgesehen sein, dass die Schrägfläche zu einer Drehachse, beispielsweise der erwähnten Drehachse, des antreibbaren oder angetriebenen Elements oder zu einer zu der Drehachse parallel verlaufenden Axialrichtung schräg und/oder in einem Winkel ausgerichtet ist.

Bei einer Ausgestaltung der Erfindung von möglicherweise eigenständiger erfinderischer Qualität kann vorgesehen sein, dass das Sperrelement an einem Außenring eines Kugellagers ausgebildet ist. Alternativ kann vorgesehen sein, dass das Sperrelement durch einen Außenring eines Kugellagers gebildet ist. Von Vorteil ist dabei, dass auf einfache Weise erreicht werden kann, dass das Sperrelement auf dem antreibbaren oder angetriebenen Element abrollen kann. Somit ist erreichbar, dass das Sperrelement einer von dem Not-Antrieb über die Schrägfläche eingebrachten Kraft möglichst wenig Widerstand entgegensetzt. Es ist somit erreichbar, dass das Sperrelement besonders leichtgängig aus der Ausnehmung herausgedrängt wird. Bevorzugt ist das Sperrelement auf einem Zapfen angeordnet oder gelagert.

Die Betätigungsvorrichtung kann bei der Erfindung zwischen einem aktivierten Zustand, in welchem das Sperrelement in die eingreifende Position eingerückt ist, und einem freigebenden Zustand, in welchem das Sperrelement in seiner Beweglichkeit freigegeben ist, schaltbar sein. Beispielsweise kann vorgesehen sein, dass der aktivierte Zustand ein bestromter Zustand und der freigebende Zustand ein unbestromter Zustand der Betätigungsvorrichtung ist. Von Vorteil ist dabei, dass bei einem Stromausfall die Betätigungsvorrichtung selbsttätig in den freigebenden Zustand überführt wird.

Bei einer Ausgestaltung der Erfindung kann vorgesehen sein, dass das Sperrelement an einem freien Ende eines Kniehebels ausgebildet ist. Von Vorteil ist dabei, dass bei der Bewegung des Sperrelements in die eingreifende Position kurz vor Erreichen dieser eingreifenden Position eine hohe Kraftübersetzung erreichbar ist. Eine sichere Arretierung, beispielsweise bei aktivierter Betätigungsvorrichtung, ist so erreichbar. Ein Kniehebel kann allgemein als eine Anordnung charakterisiert werden, bei welcher zwei Schenkel miteinander gelenkig verbunden sind, wobei einer der zwei Schenkel an einem von dem verbindenden Gelenk abgewandten Ende angelenkt ist und der andere der zwei Schenkel an einem von dem verbindenden Gelenk abgewandten Ende ein freies Ende bildet.

Bei einer Ausgestaltung der Erfindung kann vorgesehen sein, dass die Betätigungsvorrichtung an einem beweglichen Gelenk eines, beispielsweise des bereits erwähnten, Kniehebels angreift. Von Vorteil ist, dass günstige Kraftübersetzungen erreichbar sind. Besonders günstig ist es, wenn hierbei an einem freien Ende des Kniehebels das Sperrelement angeordnet ist, beispielsweise auf einen Zapfen gelagert.

Bei einer Ausgestaltung der Erfindung kann vorgesehen sein, dass ein Anschlagelement ausgebildet ist, welches eine Überführung des Kniehebels in eine vollständig gestreckte Position verhindert. Von Vorteil ist dabei, dass ein Überstrecken des Kniehebels sicher vermeidbar ist. Eine überstreckte Ausrichtung des Kniehebels wäre nachteilig, weil dann die Gefahr bestünde, dass der Kniehebel blockiert und eine selbsttätige Ausrückung des Sperrelements bei freigegebener Betätigungsvorrichtung verhindert oder zumindest erschwert. Das Anschlagelement kann hierbei an dem Kniehebel selbst oder an einem feststehenden Gehäuseteil oder auf anderer Weise ausgebildet sein.

Allgemein kann gesagt werden, dass es günstig ist, wenn die eingreifende Position des Sperrelements zu einer weniger gebeugten Position des Kniehebels korrespondiert, als die ausgerückte Position. In diesem Fall kann die Betätigungsvorrichtung beispielsweise das Sperrelement in die eingreifende Position überführen, indem der Kniehebel gestreckt wird, wobei eine vollständig gestreckte Ausrichtung des Kniehebels durch ein bereits erwähntes Anschlagelement verhindert sein kann.

Bei einer Ausgestaltung der Erfindung kann vorgesehen sein, dass der Kniehebel an einem lageverstellbaren Angriffspunkt angelenkt ist. Von Vorteil ist dabei, dass die Lage des Sperrelements in eingreifender Position einfach justierbar ist, indem eine Lage des Angriffspunkts verstellt wird. Dies kann beispielsweise durch Stellschrauben oder auf andere Weise erreicht sein. Auf diese Weise können Fertigungstoleranzen im Kniehebel und im antreibbaren oder angetriebenen Element mit dessen Ausnehmung einfach kompensiert werden.

Bei einer Ausgestaltung der Erfindung kann vorgesehen sein, dass ein freies Ende, beispielsweise das bereits erwähnte freie Ende, des Kniehebels in einem Gehäuseteil geführt ist. Von Vorteil ist dabei, dass eine Bewegung des Sperrelements zwischen der eingreifenden Position und der ausgerückten Position definiert ausführbar ist. Hierzu können entsprechende Führungselemente oder Führungsmittel ausgebildet sein. Beispielsweise ist als Führungselement ein Zapfen, insbesondere der beschriebene, das Sperrelement tragende Zapfen, ausbildbar. Alternativ oder zustätzlich ist als Führungsmittel ein Langloch oder eine Nut ausbildbar, in welche ein Zapfen eingreifen kann.

Bei einer Ausgestaltung der Erfindung kann vorgesehen sein, dass die Betätigungsvorrichtung einen Hubmagnet aufweist. Von Vorteil ist dabei, dass eine elektrische Betätigung der Betätigungsvorrichtung auf einfache Weise erreichbar ist. Von Vorteil ist weiter, dass ein Wechsel in einen freigebenden Zustand bei Stromausfall auf einfache Weise erreicht werden kann. Denn bei einem Wegfall der Bestromung verliert ein Hubmagnet automatisch seine Haltekraft. Wird diese Haltekraft zur Betätigung des Sperrelements genutzt, so ergibt sich der selbsttätige Wechsel in den freigebenden Zustand bei Stromausfall.

Bei einer Ausgestaltung der Erfindung kann vorgesehen sein, dass eine elektronische Schaltung zur Ansteuerung des Hubmagneten ausgebildet ist, welche zur Bereitstellung eines ersten Spulenstroms bei einem Anziehen und eines demgegenüber abgesenkten zweiten Spulenstroms bei einem Halten des Hubmagneten eingerichtet ist. Somit ist Energie im Betrieb einsparbar.

Bei einer Ausgestaltung der Erfindung kann vorgesehen sein, dass die Betätigungsvorrichtung eine Feder aufweist, welche eine Betätigungsbewegung der Betätigungsvorrichtung unterstützt. Von Vorteil ist dabei, dass eine zusätzliche Kraft für die Betätigungsbewegung bereitstellbar ist. Die Verwendung einer Feder ist besonders dann günstig, wenn die Betätigungsvorrichtung einen Hubmagneten aufweist. Denn ein Hubmagnet entwickelt am Anfang seines Stellweges nur eine geringe Kraft. Eine unterstützende Feder bewirkt nun, dass das Sperrelement von Beginn der Verstellbewegung an bereits mit einer ausreichenden Kraft beaufschlagbar ist. Besonders günstig ist es hierbei, wenn die Feder durch Überführen des Sperrelements aus der eingreifenden Position in die ausgerückte Position spannbar ist.

Bei einer Ausgestaltung der Erfindung kann vorgesehen sein, dass die Feder entspannt ist, wenn das Sperrelement in die eingreifende Position überführt ist. Von Vorteil ist dabei, dass die Feder gegen das selbsttätige Ausrücken des Sperrelements bei freigebendem Zustand der Betätigungsvorrichtung einen geringstmöglichen Widerstand bietet.

Allgemein ist es günstig, wenn eine Federkraft der Feder so dimensioniert ist, dass das Sperrelement bei inaktiver Betätigungsvorrichtung mit dem Not-Antrieb gegen die Federkraft aus der Ausnehmung ausrückbar ist. Von Vorteil ist dabei, dass ein selbsttätiges Ausrücken gegen die Feder durch den. Not-Antrieb bewirkbar ist.

Bei einer Ausgestaltung der Erfindung kann vorgesehen sein, dass die Betätigungsvorrichtung ein das Sperrelement direkt oder indirekt beaufschlagendes Stößelelement aufweist, welches an einen beweglichen Antriebsteil der Betätigungsvorrichtung lageeinstellbar befestigt ist. Von Vorteil ist dabei, dass eine Lage des Sperrelements in der eingreifenden Position justierbar ist, indem eine Lage des Stößelelements an dem Antriebsteil eingestellt wird. Beispielsweise kann das Antriebsteil ein Anker eines Hubmagnetes sein. Besonders günstig ist es, wenn das Stößelelement ein Gewinde aufweist, mit welchem es in das Antriebsteil eingeschraubt ist. Auf diese Weise ist eine besonders einfache Lageeinstellung erreichbar.

Bei einer Ausgestaltung der Erfindung kann vorgesehen sein, dass ein Detektionselement vorhanden ist, mit dem ein Erreichen und/oder Innehaben der eingreifenden Position detektierbar ist. Von Vorteil ist dabei, dass eine Arretierung des Not-Antriebs überwachbar ist. Besonders günstig ist es, wenn das Detektionselement ein Endschalter ist. Auf diese Weise ist das Erreichen der eingreifenden Position besonders einfach detektierbar.

Bei einer Ausgestaltung der Erfindung kann vorgesehen sein, dass eine Verknüpfungseinrichtung vorhanden ist, welche zu einer logischen Verknüpfung eines Ausgangssignals des Detektionselements mit einem Überwachungssignal der Betätigungseinrichtung eingerichtet ist. Dieses Überwachungssignal kann beispielsweise abgeleitet sein von einer Bestromung der Betätigungseinrichtung. Von Vorteil ist dabei, dass überwachbar ist, ob das Sperrelement bei freigebender Betätigungseinrichtung ausgerückt ist und/oder ob der Not-Antrieb bei aktivierter Betätigungseinrichtung arretiert ist.

Bei einer Ausgestaltung der Erfindung kann vorgesehen sein, dass im Kraftfluss zwischen der Eingangswelle und der Abtriebswelle ein Überlagerungsgetriebe angeordnet ist, wobei ein zweiter Eingang des Überlagerungsgetriebes mit dem antreibbaren und/oder angetriebenen Element gekoppelt ist. Von Vorteil ist dabei, dass auf einfache Weise eine Addition der Drehzahlen und/oder Drehmomente des Not-Antriebs und der Eingangswelle erreichbar ist. Somit ist ein Umschalten durch Kupplungen bei einem Wechsel vom Normalbetrieb auf einen Betrieb mit Not-Antrieb verzichtbar. Ein Überlagerungsgetriebe kann beispielsweise als ein Getriebe mit zwei Eingängen und einer Abtriebswelle charakterisiert werden, wobei über die Eingänge jeweils eingebrachte Drehmomente - gegebenenfalls durch eine Übersetzung umgesetzt - an der Abtriebswelle summiert bereitgestellt sind. Beispielsweise kann das Überlagerungsgetriebe ein Differentialgetriebe oder ein Umlaufgetriebe, insbesondere ein vierrädriges Planetengetriebe, sein.

Die Erfindung ist mit Vorteil einsetzbar bei einer Armaturen-Stellanordnung der eingangs beschriebenen Art, wobei die Armaturen-Schaltvorrichtung erfindungsgemäß, insbesondere wie zuvor beschrieben und/oder nach einem der auf eine Armaturen-Schaltvorrichtung gerichteten Schutzansprüche, ausgebildet ist. Hierbei kann die Armaturen-Schaltvorrichtung mit dem Stellantrieb integriert oder mit diesem lösbar verbindbar ausgebildet sein.

Die Erfindung wird nun anhand eines Ausführungsbeispiels näher beschrieben, ist jedoch noch nicht auf dieses Ausführungsbeispiel beschränkt. Weitere Ausführungsbeispiele ergeben sich durch Kombination der Merkmale einzelner oder mehrerer Schutzansprüche untereinander und/oder mit einzelnen oder mehreren Merkmalen des Ausführungsbeispiels.

Es zeigt:
Fig. 1 eine erfindungsgemäße Armaturen-Stellanordnung in stark vereinfachter Blockdarstellung,
Fig. 2 eine Arretiervorrichtung einer erfindungsgemäßen Armaturen-Schaltvorrichtung mit in eingreifender Position befindlichem Sperrelement in einer Schnittdarstellung,
Fig. 3 die Arretiervorrichtung der Armaturen-Schaltvorrichtung gemäß Fig. 2 mit ausgerücktem Sperrelement,
Fig. 4 die erfindungsgemäße Arretierungsvorrichtung aus Fig. 2 in einer dreidimensionalen Schrägansicht,
Fig. 5 in einer dreidimensionalen Schrägansicht einen Teil einer weiteren erfindungsgemäßen Arretierungsvorrichtung mit der Betätigungsvorrichtung und dem die Ausnehmung bereitstellenden, angetriebenen Element, wobei das Sperrelement aus der Ausnehmung ausgerückt ist,
Fig. 6 das Ausführungsbeispiel gemäß Fig. 5 in einer Schnittdarstellung und
Fig. 7 das Ausführungsbeispiel gemäß Fig. 5 in einer Schnittdarstellung, wobei das Sperrelement in die Ausnehmung eingreift.

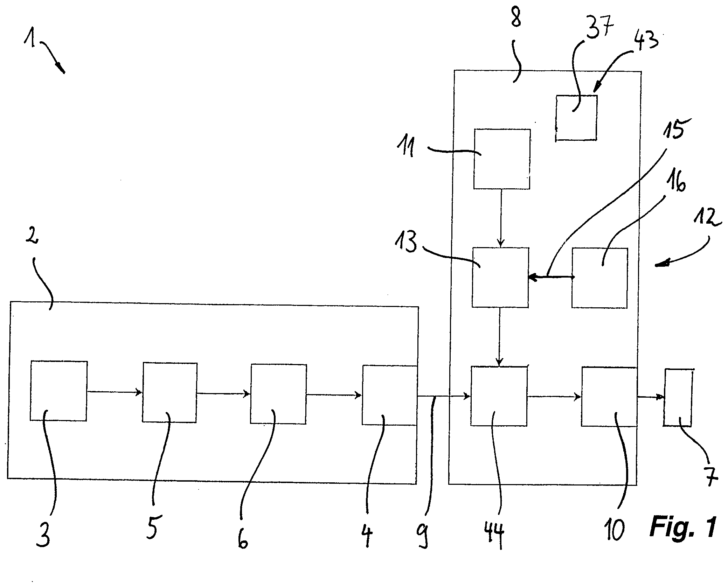

Fig. 1 zeigt in einer stark vereinfachten Darstellung als Blockbild eine im Ganzen mit 1 bezeichnete Armaturen-Stellanordnung.

Die Armaturen-Stellanordnung 1 hat in an sich bekannter Weise einen Stellantrieb 2. Der Stellantrieb 2 weist einen elektrisch, hydraulisch, pneumatisch oder auf andere Weise betreibbaren Motor 3 und einen von dem Motor 3 antreibbaren Abtrieb 4 auf. Zwischen dem Motor 3 und dem Abtrieb 4 können eine Bremse 5 und/oder ein Getriebe 6 in an sich von Stellantrieben bekannter Weise zwischengeschaltet sein.

Der Stellantrieb 3 dient zur Betätigung einer Armatur 7. Diese Armatur 7 kann beispielsweise ein Ventil sein. Zwischen dem Stellantrieb 2 und der Armatur 7 ist eine erfindungsgemäße Armaturen-Schaltvorrichtung 8 angeordnet.
Die Armaturen-Schaltvorrichtung 8 dient zum Betätigen oder Schalten, beispielsweise Schließen oder Öffnen, der Armatur 7 bei einer Betriebsstörung oder einem Netzausfall.
Hierzu ist die Armaturen-Schaltvorrichtung 8 mit einer Eingangswelle 9 und einer Abtriebswelle 10 versehen, die miteinander gekoppelt sind, damit ein Kraftfluss von der Eingangswelle 9 zu der Abtriebswelle 10 übertragbar ist.
Die Eingangswelle 9 ist zur Bildung der Armaturen-Stellanordnung 1 mit dem Abtrieb 4 des Stellantriebs 2 verbunden. Die Abtriebswelle 10 ist für den Betrieb mit der Armatur 7 wirkverbunden.
Die Armaturen-Schaltvorrichtung 8 weist einen Not-Antrieb 11 auf, mit welchem die Abtriebswelle 10 bei Ausfall des Stellantriebs 2 betätigbar oder antreibbar ist, um die Abtriebswelle 10 aus der Gebrauchsposition in eine definierte Endposition, beispielsweise eine geschlossene oder geöffnete Armatur 7, zu überführen.
Hierzu ist zwischen der Eingangswelle 9 und der Abtriebswelle 10 ein Überlagerungsgetriebe 44 angeordnet, über welches der Not-Antrieb 11 an die Abtriebswelle 10 angekoppelt ist.

Der Not-Antrieb 11 kann hierbei aus einem nicht weiter dargestellten, an sich bekannten Energiespeicher elektrisch, pneumatisch, hydraulisch oder mechanisch oder auf andere Weise angetrieben sein.

Um zu verhindern, dass der Not-Antrieb 11 in den Normalbetrieb durch den Stellantrieb 2 ungewollt eingreift, ist eine Arretierungsvorrichtung 12 dem Not-Antrieb 11 nachgeschaltet.

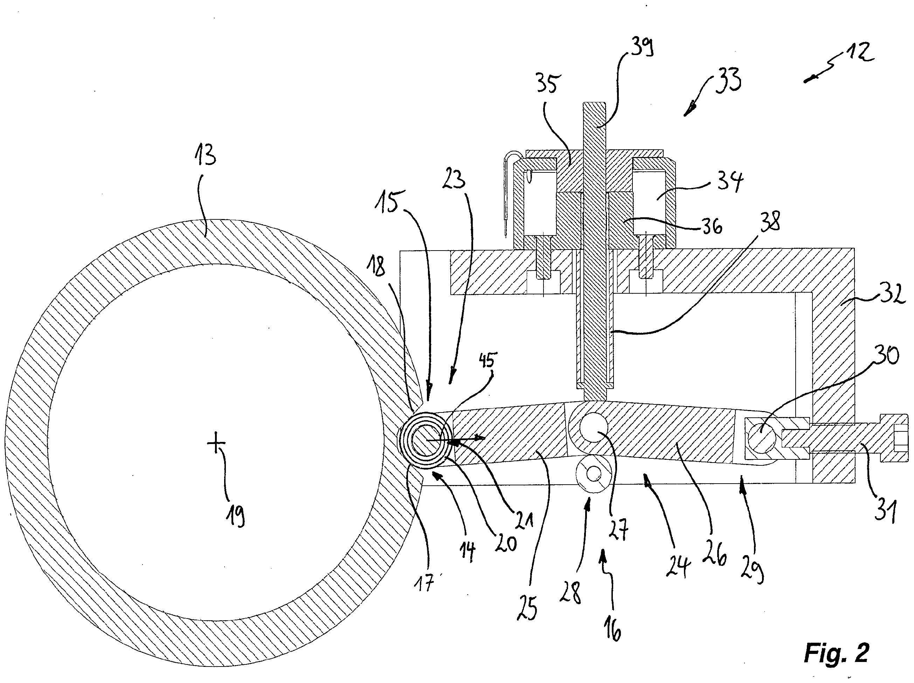

Diese Arretierungsvorrichtung 12 ist in den Fig. 2 bis 4 näher gezeigt und wird unter Bezug auf diese Figuren näher beschrieben.

Die Arretierungsvorrichtung 12 hat ein Element 13, das im Kraftfluss zwischen dem Not-Antrieb 11 und der Abtriebswelle 10 angeordnet ist. Das Element 13 ist somit von dem Not-Antrieb 11 antreibbar und wird im Fall einer Störung von dem Not-Antrieb 11 angetrieben.

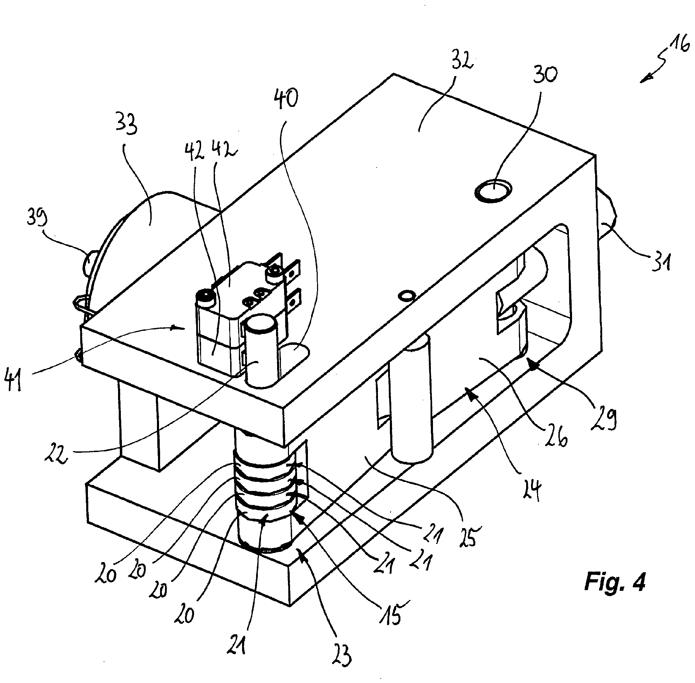

Zur Vereinfachung der Darstellung ist das Element 13 in Fig. 4 weggelassen.

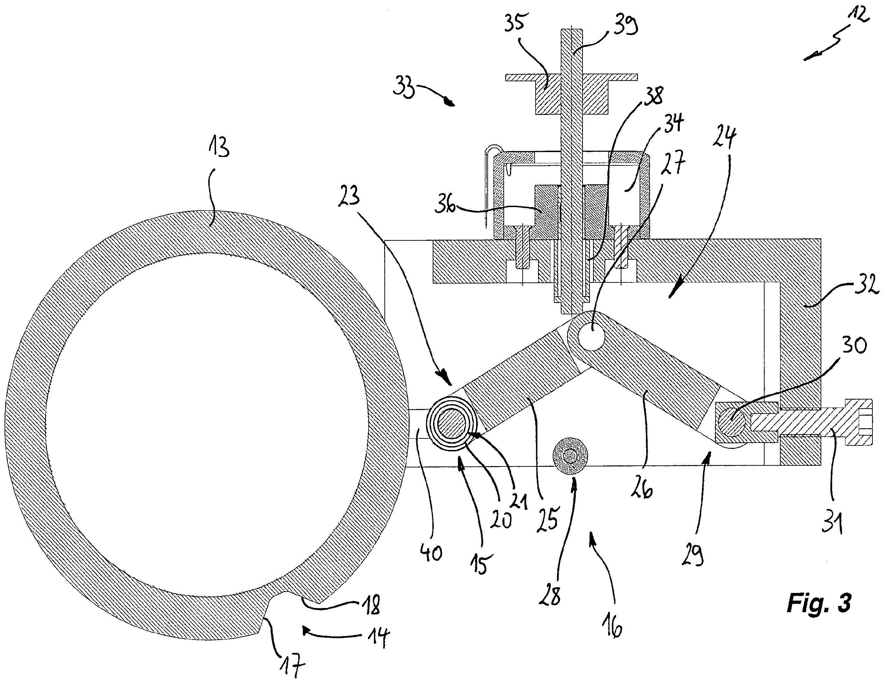

Das Element 13 kann hierbei als rotierendes Element ausgebildet sein. Fig. 2 und 3 zeigen das Element 13 als Teil einer Welle, hier eine Hohlwelle. Es sind jedoch bei weiteren Ausführungsbeispielen auch andere rotierende Elemente, aber beispielsweise auch linear bewegliche oder verschwenkbare Elemente als Element 13 vorgesehen.

An dem Element 13 ist außenseitig eine Ausnehmung 14 ausgebildet.

Zur Arretierung greift ein Sperrelement 15 in die Ausnehmung 14 ein, wie dies Fig. 2 zeigt.

Das Sperrelement 15 ist hierbei mit einer Betätigungsvorrichtung 16 aus der in Fig. 3 gezeigten ausgerückten Position in die in Fig. 2 gezeigte eingreifende Position bewegbar.

Die Ausnehmung 14 ist hierbei mit einer Schrägfläche 17 ausgebildet, welche das Sperrelement 15 in dessen eingreifender Position beaufschlagt.

Die Schrägfläche 17 ist hierbei so ausgerichtet, dass eine Kraft, die sich aus einem von dem Not-Antrieb 11 auf das Element 13 eingebrachten Drehmoment ergibt und die auf das Sperrelement 15 in dessen eingreifender Position eingreift, eine Komponente 45 aufweist, durch welche das Sperrelement 15 aus der Ausnehmung 14 herausgedrängt und somit ausgerückt würde, wenn die Betätigungsvorrichtung 16 das Ausrücken freigibt.

Auf einer gegenüberliegenden Seite der Ausnehmung 14 ist eine weitere Schrägfläche 18 ausgebildet, welche bei umgekehrtem Drehsinn des Elements 13 in gleicher Weise wirkt.

Die Schrägfläche 17 und die Schrägfläche 18 schließen zwischen sich eine Öffnung ein, die sich durch die schräge Ausrichtung der Schrägflächen 17, 18 zu dem offenen Ende der Ausnehmung 14, hin also in Richtung eines zunehmenden Radius, aufweitet.

In Bezug auf die Drehachse 19 des Elements 13 sind die Schrägflächen 17, 18 jeweils gegenüber einer Radialrichtung angestellt bzw. in einem Winkel ausgerichtet.

Hierdurch ergibt sich, dass die Komponente 45 der beaufschlagenden Kraft bezüglich der Drehachse 19 radial ausgerichtet ist. Eventuell vorhandene oder entwickelte tangentiale Kraftkomponenten werden beispielsweise durch entsprechende Lagerungen oder Auflageflächen aufgenommen und spielen für die weiteren Betrachtungen keine Rolle.

Um ein Ausrücken des Sperrelements 15 zu erleichtern, ist das Sperrelement 15 als Außenring 20 eines Kugellagers 21 ausgebildet.

Fig. 4 zeigt, dass vier Kugellager 21 auf einem gemeinsamen Zapfen 22 nebeneinander angeordnet sind, um eine größere Abrollfläche zu bieten. Bei weiteren Ausführungsbeispielen können weniger oder mehr derartige Kugellager 21, beispielsweise zwei, drei, fünf oder mehr als fünf Kugellager, auf dem Zapfen 22 angeordnet sein.

Das Sperrelement 19 ist an einem freien Ende 23 eines Kniehebels 24 ausgebildet und angeordnet.

Der Kniehebel 24 hat hierbei einen ersten Schenkel 25 und einen zweiten Schenkel 26, die durch ein Gelenk 27 miteinander gelenkig verbunden sind.

Die Betätigungsvorrichtung 16 greift zum Verstellen des Sperrelements 15 an den Gelenk 27 an.

Durch die Betätigungseinrichtung 16 wird der Kniehebel 24 aus einer gebeugten Stellung oder Position gemäß Fig. 3 in eine gestrecktere Stellung oder Position gemäß Fig. 2 überführt. Ein Anschlagelement 28 ist so positioniert, dass ein Erreichen der vollständig gestreckten Position oder einer überstreckten Position des Kniehebels 24 sicher vermieden oder verhindert wird. Der Anschlagelement 28 ist hierbei an der Gehäusewand 32 oder einem anderen feststehenden Rahmenteil ausgebildet, kann aber bei weiteren Ausführungsbeispielen auch am Kniehebel 24 ausgebildet sein.

An dem Ende 29 des Kniehebels 24, welches von dem freien Ende 23 abgewandt ist, ist der Kniehebel 24 an einem Angriffspunkt 30 angelenkt. Der Angriffspunkt 30 ist fest mit einem Stellelement 31, hier beispielhaft mit einer Stellschraube, verbunden. Das Stellelement 31 ist mit dem Gehäuseteil 32 derart verbunden, dass die Lage des Stellelements 31 relativ zum Gehäuseteil 32 veränderbar und verstellbar ist. Im Ausführungsbeispiel ist die Stellschraube in eine Gewindebohrung der Gehäusewand 32 oder eines sonstigen festen Rahmenteils eingeschraubt.

Somit ist der Angriffspunkt 30 durch Verstellen des Stellelements 31 lageverstellbar. Durch diese Lageverstellung ist die Position des Sperrelements 15 in eingreifender Position gemäß Fig. 2 auf die tatsächliche Lage der Ausnehmung 14 abstimmbar.

Die Betätigungsvorrichtung 16 weist einen elektrisch betätigbaren Hubmagneten 33 auf. Der Hubmagnet 33 hat eine Spule 34, ein Antriebsteil 35 in Form eines Ankers und einen Kern 36.

In an sich bekannter Weise wird das Antriebsteil 35 bei Bestromung der Spule 34 zur Schließung eines magnetischen Kreises an den Kern 36 angezogen.

Eine elektronische Schaltung 37 sorgt hierbei dafür, dass beim Anziehen des Antriebsteils 35 ein erster Spulenstrom durch die Spule 34 fließt, während zum Halten des Antriebsteils 35 ein demgegenüber abgesenkter, zweiter Spulenstrom fließt.

In der in Fig. 3 gezeigten Situation wird der Hubmagnet 33 eine geringe Kraft entwickeln können, da der Luftspalt zwischen dem Antriebsteil 35 und dem Kern 36 noch vergleichsweise groß ist.

Zur Unterstützung einer Betätigungsbewegung weist die Betätigungsvorrichtung 16 zusätzlich eine Feder 38 - hier eine Schraubenfeder - auf, welche die Betätigungsbewegung bei Bestromung des Hubmagnets 33 unterstützt.

Die Feder 38 dient somit nicht zum Rückholen des Kniehebels 24 in die gebeugte Position, sondern sorgt ebenfalls für eine Überführung in die leicht gestreckte Position gemäß Fig. 2.

Die Feder 38 ist hierbei so dimensioniert, dass sie in der Darstellung gemäß Fig. 2 im entspannten Zustand ist.

Die Feder 38 trägt daher in Fig. 2 zum Andrücken des Sperrelements 15 in die Ausnehmung 14 nichts oder nahezu nichts bei.

Insgesamt ist die Federkraft der Feder 38 so dimensioniert, dass das Sperrelement 15 gegen die von der Feder 38 entwickelte Kraft durch den Not-Antrieb 11 aus der Ausnehmung 14 ausgerückt werden kann.

Die Feder 38 hat mit anderen Worten die Eigenschaft, dass die von ihr entwickelte Kraft auf den Kniehebel 24 in derjenigen Bewegungsrichtung abnimmt, in welcher die von dem Hubmagneten 33 entwickelte Kraft bei bestromter Spule 34 zunimmt.

Die Betätigungsvorrichtung 16 hat ein Stößelelement 39, welches den Kniehebel 24 beaufschlagt. Das Stößelelement 39 beaufschlagt das Sperrelement 15 indirekt über den Kniehebel 24.

Das Stößelelement 39 ist in das bewegliche Antriebsteil 35 eingeschraubt. Durch Schrauben des Stößelelements 39 kann somit dessen Lage relativ zu dem Antriebsteil 35 verändert werden. Das Stößelelement 39 ist somit an dem Antriebsteil 35 lageverstellbar, um die eingreifende Position des Sperrelements 15 und dessen ausgerückte Position gemäß Fig. 3 einstellen zu können. Auf das Stößelelement 39 ist die Feder 38 aufgesteckt.

Das Sperrelement 15 ist durch ein Führungsmittel 40 der Gehäusewand 32 oder eines anderen Rahmenteils geführt. Hierzu greift im Ausführungsbeispiel der das Sperrelement 15 tragende Zapfen 22 in ein das Führungsmittel 40 bildendes Langloch ein.

An der Gehäusewand 32 ist ein Detektionselement 41 angeordnet, mit welchem das Erreichen und Innehaben der eingreifenden Position des Sperrelements 15 detektierbar ist.

Hierzu weist das Detektionselement 41 zwei parallel arbeitende Endschalter 42 auf. Die Endschalter 42 werden von dem Zapfen 22 oder einem anderen, mit dem Sperrelement 15 bewegten Teil betätigt.

Ein Ausgangssignal des Detektionselements 41 wird von der bereits erwähnten elektronischen Schaltung 37 verwendet, um den Spulenstrom abzusenken.

Die Betätigungsvorrichtung 16 weist ferner eine logische Verknüpfungseinrichtung 43 auf.

Die logische Verknüpfungseinrichtung 43 kann separat ausgebildet oder in die elektronische Schaltung 37 integriert ausgeführt sein.

Die logische Verknüpfungseinrichtung 43 verknüpft ein Ausgangssignal des Detektionselements 41, beispielsweise das bereits erwähnte Ausgangssignal, mit einem Überwachungssignal der Betätigungsvorrichtung 16. Diese logische Verknüpfung kann beispielsweise eine Und-Verknüpfung sein. Das Überwachungssignal der Betätigungsvorrichtung 16 kann beispielsweise ein Signal über die Bestromung der Betätigungsvorrichtung oder eine sonstige Aktivierung dieser Betätigungsvorrichtung 16 sein.

Das logisch verknüpfte Signal der Verknüpfungseinrichtung 43 kann zur Überwachung auf einen fehlerfreien Betrieb der Betätigungsvorrichtung 16 genutzt werden. Es sind so Zustände erkennbar, bei denen die Betätigungsvorrichtung 16 zwar aktiviert, der arretierende Zustand der eingreifenden Position des Sperrelements 15 jedoch nicht erreicht ist oder umgekehrt das Sperrelement 15 nicht in die ausgerückte Position verfährt, obwohl die Betätigungsvorrichtung 16 nicht aktiviert ist.

Bei derartigen festgestellten Abweichungen wird ein Fehlersignal in an sich bekannter Weise generiert und ausgegeben.

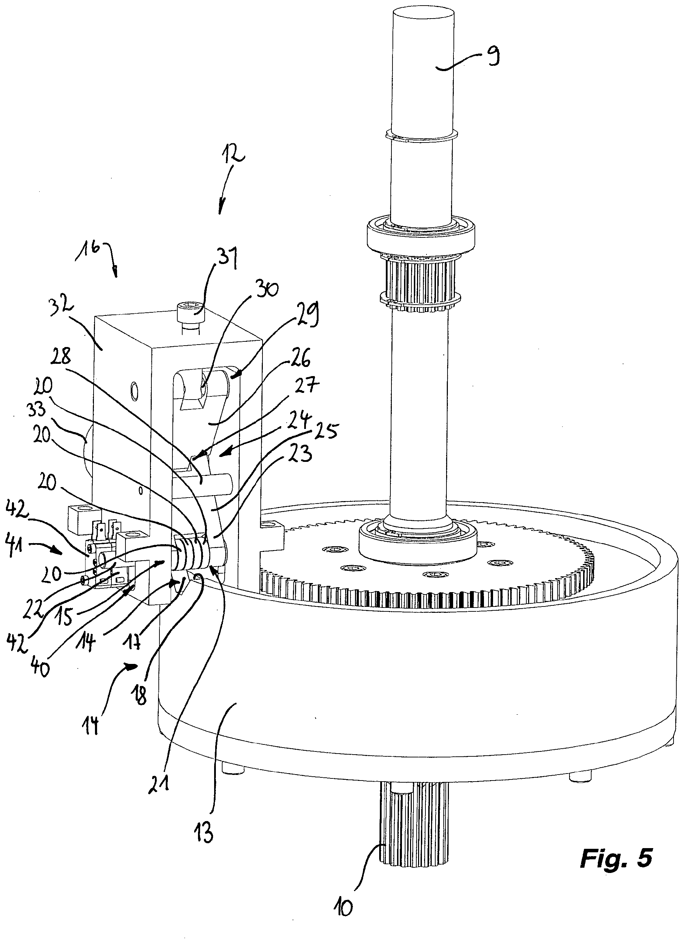

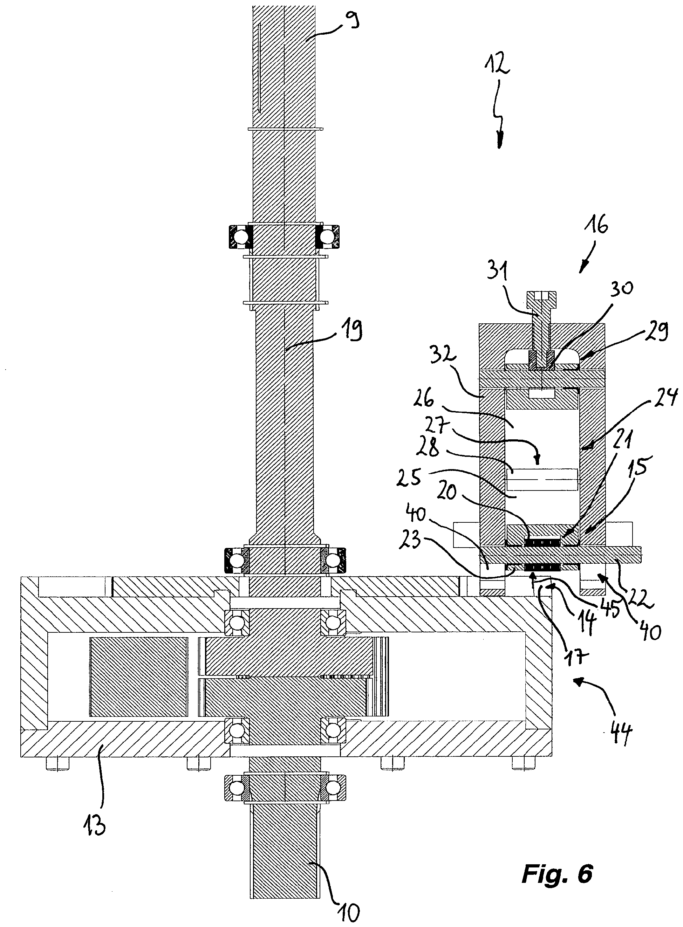

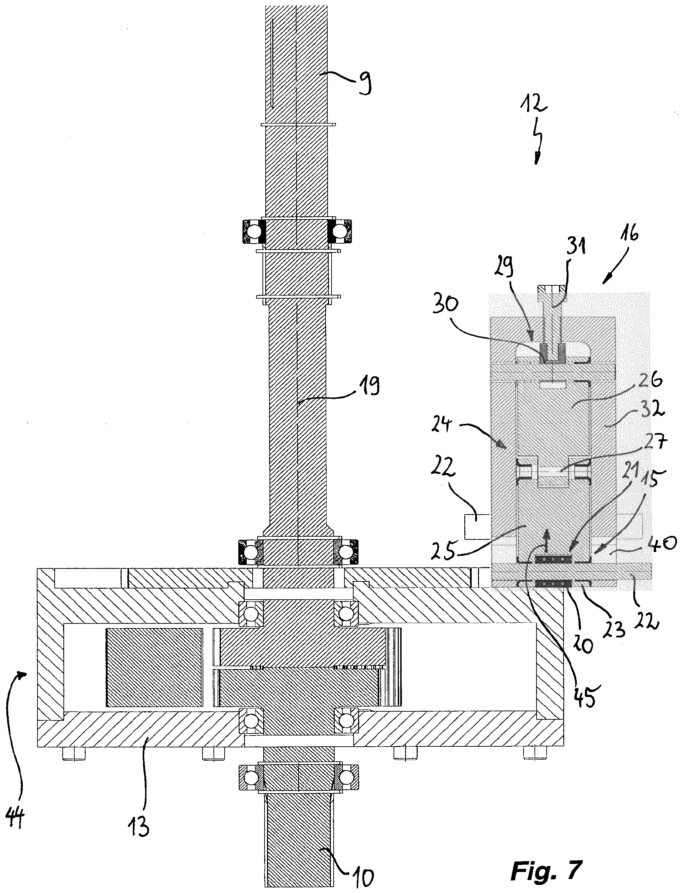

Fig. 5 zeigt in ebenfalls stark vereinfachter Darstellung Teile einer weiteren erfindungsgemäßen Armaturen-Schaltvorrichtung 8, Fig. 6 eine Schnittdarstellung zu Fig. 5 und Fig. 7 das Sperrelement 15 in eingerückter, in die Ausnehmung 14 eingreifender Position. Konstruktiv und/oder funktionell zu dem Ausführungsbeispiel gemäß Fig. 1 bis 4 gleichartige oder identische Bauteile und Funktionseinheiten sind mit denselben Bezugszeichen bezeichnet und nicht noch einmal gesondert beschrieben. Die Ausführungen zu Fig. 1 bis 4 gelten daher zu Fig. 5 bis 7 entsprechend.
Das Ausführungsbeispiel gemäß Fig. 5 bis 7 unterscheidet sich von dem vorangegangenen Ausführungsbeispiel zumindest dadurch, dass sich die Ausnehmung 14 an dem angetriebenen und/oder antreibbaren Element 13 in einer axialen Richtung, also in einer Richtung parallel zur Drehachse 19, öffnet. Das Sperrelement 15 greift korrespondierend mit einer axial ausgerichteten Bewegung in die Ausnehmung 14 zur Arretierung ein. Das Element 13 ist hier als Teil eines Gehäuses des Überlagerungsgetriebes 44 ausgebildet.
Dies hat zur Folge, dass die Komponente 45 in Bezug auf eine Drehachse 19 des antreibbaren und/oder angetriebenen Elements 13 axial, also parallel zu der Drehachse 19, ausgerichtet ist. Die Betätigungsvorrichtung 16 ist in einem Axialabschnitt zwischen dem nicht weiter gezeigten Überlagerungsgetriebe 44 und dem ebenfalls nicht weiter gezeigten Not-Antrieb 11 angeordnet. Dies erlaubt eine Anordnung nahe der Drehachse 19, die auch bei einem radial ausrückbaren Sperrelement 15 erreichbar ist.
Bei der Armaturen-Schaltvorrichtung 8 wird vorgeschlagen, eine Ausnehmung 14 eines von einem Not-Antrieb 11 angetriebenen Elements 13 derart mit wenigstens einer Schrägfläche 17, 18 auszubilden, dass ein in die Ausnehmung 14 eingreifendes Sperrelement 15 durch Betätigung des Not-Antriebs 11 aus der Ausnehmung 14 ausrückbar ist.

## Patentansprüche

1. Armaturen-Schaltvorrichtung (8), mit einer Abtriebswelle (10) und mit einer an die Abtriebswelle (10) gekoppelten Eingangswelle (9), über welche die Abtriebswelle (10) im Normalbetrieb antreibbar ist, und mit einem Not-Antrieb (11), wobei die Abtriebswelle (10) zusätzlich durch den Not-Antrieb (11) aus einer Gebrauchsposition in eine Endposition überführbar ist, wobei an einem von dem Not-Antrieb (11) antreibbaren und/oder angetriebenen Element (13) der Armaturen-Schaltvorrichtung eine Ausnehmung (14) ausgebildet ist und wobei ein Sperrelement (15) der Armaturen-Schaltvorrichtung mit einer Betätigungsvorrichtung (16) der Armaturen-Schaltvorrichtung im Zuge einer Betätigungsbewegung von einer aus der Ausriehmung (14) ausgerückten Position in eine in die Ausnehmung (14) eingreifende Position bewegbar ist, wobei die Ausnehmung (14) wenigstens eine das Sperrelement (15) beaufschlagende Schrägfläche (17, 18) aufweist und die wenigstens eine Schrägfläche (17, 18) so ausgerichtet ist, dass eine mit dem Not-Antrieb (11) auf das Sperrelement (15) in der eingreifenden Position einbringbare Kraft eine das Sperrelement (15) aus der Ausnehmung (14) ausrückende - Komponente (45) aufweist, **dadurch gekennzeichnet, dass** die Betätigungsvorrichtung (16) eine Feder (38) aufweist, welche die Betätigungsbewegung der Betätigungsvorrichtung (16) unterstützt, sodass eine zusätzliche Kraft für die Betätigungsbewegung bereitstellbar ist, und wobei die Feder (38) durch Überführendes Sperrelements (15) aus der eingreifenden Position in die ausgerückte Position spannbar ist.

2. Armaturen-Schältvorrichtung (8) nach Anspruch 1, **dadurch gekennzeichnet, dass** die Schrägfläche (17, 18) eine sich zu einem offenen Ende der Ausnehmung (14) hin aufweitende Öffnung beschreibt.

3. Armaturen-Schaltvorrichtung (8) nach Anspruch 1 oder 2, **dadurch gekennzeichnet, dass** das antreibbare und/oder angetriebene Element (13) ein rotierendes Element ist und/oder dass die Komponente (45) in Bezug auf eine Drehachse (19) des antreibbaren und/oder angetriebenen Elements (13) radial oder axial ausgerichtet ist.

4. Armaturen-Schaltvorrichtung (8) nach einem der Ansprüche 1 bis 3, **dadurch gekennzeichnet, dass** das Sperrelement (15) an einem oder durch einen Außenring (20) eines Kugellagers (21) gebildet ist.

5. Armaturen-Schaltvorrichtung (8) nach einem der Ansprüche 1 bis 4, **dadurch gekennzeichnet, dass** das Sperrelement (15) an einem freien Ende (23) eines Kniehebels (24) ausgebildet ist und/oder dass die Betätigungsvorrichtung (16) an einem beweglichen Gelenk (27) des oder eines Kniehebels (24) angreift.

6. Armaturen-Schaltvorrichtung (8) nach Anspruch 5, **dadurch gekennzeichnet, dass** ein Anschlagelement (28) ausgebildet ist, welches eine Überführung des Kniehebels (24) in eine gestreckte Position verhindert.

7. Armaturen-Schaltvorrichtung (8) nach Anspruch 5 oder 6, **dadurch gekennzeichnet, dass** der Kniehebel (24) an einem lageverstellbaren Angriffspunkt (30) angelenkt ist und/oder dass das freie oder ein freies Ende (23) des Kniehebels (24) in einem Gehäuseteil (32) geführt ist.

8. Armaturen-Schaltvorrichtung (8) nach einem der Ansprüche 1 bis 7, **dadurch gekennzeichnet, dass** die Betätigungsvorrichtung (16) einen Hubmagneten (33) aufweist.

9. Armaturen-Schaltvorrichtung (8) nach Anspruch 8, **dadurch gekennzeichnet, dass** eine elektronische Schaltung (37) zur Ansteuerung des Hubmagneten (33) ausgebildet ist, welche zur Bereitstellung eines ersten Spulenstroms bei einem Anziehen und eines demgegenüber abgesenkten zweiten Spulenstroms bei einem Halten des Hubmagneten (33) eingerichtet ist.

10. Armaturen-Schaltvorrichtung (8) nach einem der vorangehenden Ansprüche, **dadurch gekennzeichnet, dass** die Feder (38) entspannt ist, wenn das Sperrelement (15) in die eingreifende Position überführt ist, und/oder dass eine Federkraft der Feder (38) so dimensioniert ist, dass das Sperrelement (15) bei inaktiver Betätigungsvorrichtung (16) mit dem Not-Antrieb (11) gegen die Federkraft aus der Ausnehmung (14) ausrückbar ist.

11. Armaturen-Schaltvorrichtung nach einem der Ansprüche 1 bis 10, **dadurch gekennzeichnet, dass** die Betätigungsvorrichtung (16) ein das Sperrelement (15) direkt oder indirekt beaufschlagendes Stößelelement (39) aufweist, welches an einem beweglichen Antriebsteil (35) der Betätigungsvorrichtung (16) lageeinstellbar befestigt ist.

12. Armaturen-Schaltvorrichtung (8) nach einem der Ansprüche 1 bis 11, **dadurch gekennzeichnet, dass** ein Detektionselement (41), insbesondere ein Endschalter (42), vorhanden ist, mit dem ein Erreichen und/oder Innehaben der eingreifenden Position detektierbar ist.

13. Armaturen-Schaltvorrichtung (8) nach Anspruch 12, **dadurch gekennzeichnet, dass** eine Verknüpfungseinrichtung (43) vorhanden ist, welche zu einer logischen Verknüpfung eines Ausgangssignals des Detektionselements (42) mit einem Überwachungssignal der Betätigungsvorrichtung (16) eingerichtet ist.

14. Armaturen-Schaltvorrichtung (8) nach einem der Ansprüche 1 bis 13, **dadurch gekennzeichnet, dass** im Kraftfluss zwischen der Eingangswelle (9) und der Abtriebswelle (10) ein Überlagerungsgetriebe (44) angeordnet ist, wobei ein zweiter Eingang des Überlagerungsgetriebes (44) mit dem antreibbaren und/oder angetriebenen Element (13) gekoppelt ist.

15. Armaturen-Stellanordung (1) mit einem Stellantrieb (2), wobei ein Abtrieb (4) des Stellantriebs (2) mit der Eingangswelle (9) einer Armaturen-Schaltvorrichtung (8) wirkverbunden ist und die Armaturen-Schaltvorrichtung (8) nach einem der vorangehenden Ansprüche ausgebildet ist.

## Claims

1. Fitting switching device (8), having a driven shaft (10) and having an input shaft (9) which is coupled to the driven shaft (10) and by way of which the driven shaft (10) can be driven in normal operation, and having an emergency drive (11), wherein the driven shaft (10) can be transferred from a usage position into an end position additionally by the emergency drive (11), wherein a recess (14) is formed on an element (13) of the fitting switching device, which element is drivable and/or driven by the emergency drive (11), and wherein a blocking element (15) of the fitting switching device is movable, using an actuating device (16) of the fitting switching device, during an actuating movement, from a position disengaged from the recess (14) into a position engaging in the recess (14), wherein the recess (14) comprises at least one oblique surface (17, 18) acting upon the blocking element (15) and the at least one oblique surface (17, 18) is oriented such that a force which can be applied to the blocking element (15) in the engaging position using the emergency drive (11) has a component (45) disengaging the blocking element (15) from the recess (14), **characterised in that** the actuating device (16) has a spring (38) which assists the actuating movement of the actuating device (16) so that an additional force can be provided for the actuating movement, and wherein the spring (38) can be tensioned by transferring the blocking element (15) from the engaging position into the disengaged position.

2. Fitting switching device (8) as claimed in claim 1, **characterised in that** the oblique surface (17, 18) describes an opening widening towards an open end of the recess (14).

3. Fitting switching device (8) as claimed in claim 1 or 2, **characterised in that** the drivable and/or driven element (13) is a rotating element, and/or **in that** the component (45) is oriented radially or axially in relation to an axis of rotation (19) of the drivable and/or driven element (13).

4. Fitting switching device (8) as claimed in any one of claims 1 to 3, **characterised in that** the blocking element (15) is formed on or by an outer ring (20) of a ball bearing (21).

5. Fitting switching device (8) as claimed in any one of claims 1 to 4, **characterised in that** the blocking element (15) is formed on a free end (23) of a knee lever (24), and/or **in that** the actuating device (16) engages on a movable joint (27) of the or a knee lever (24).

6. Fitting switching device (8) as claimed in claim 5, **characterised in that** a stop element (28) is formed which prevents the knee lever (24) from being transferred into a straightened position.

7. Fitting switching device (8) as claimed in claim 5 or 6, **characterised in that** the knee lever (24) is articulated at a positionally adjustable engagement point (30) and/or **in that** the free or a free end (23) of the knee lever (24) is guided in a housing part (32).

8. Fitting switching device (8) as claimed in any one of claims 1 to 7, **characterised in that** the actuating device (16) comprises a solenoid (33).

9. Fitting switching device (8) as claimed in claim 8, **characterised in that** an electronic circuit (37) for activating the solenoid (33) is formed, which circuit is designed for provision of a first coil current during attraction of the solenoid (33) and for provision of a comparably lower second coil current during holding of the solenoid.

10. Fitting switching device (8) as claimed in any one of the preceding claims, **characterised in that** the spring (38) is relaxed when the blocking element (15) is transferred into the engaging position, and/or **in that** a spring force of the spring (38) is dimensioned such that, when the actuating device (16) is inactive, the blocking element (15) can be disengaged from the recess (14) against the spring force using the emergency drive (11).

11. Fitting switching device as claimed in any one of claims 1 to 10, **characterised in that** the actuating device (16) has a pusher element (39) acting directly or indirectly on the blocking element (15) and being fastened, in a positionally controllable manner, to a movable drive part (35) of the actuating device (16).

12. Fitting switching device (8) as claimed in any one of claims 1 to 11, **characterised in that** a detection element (41), in particular a limit switch (42), is provided, with which it is possible to detect if the engaging position has been reached and/or occupied.

13. Fitting switching device (8) as claimed in claim 12, **characterised in that** a combination device (43) is provided which is designed for logical combination of an output signal of the detection element (42) with a monitoring signal of the actuating device (16).

14. Fitting switching device (8) as claimed in any one of claims 1 to 13, **characterised in that** an overriding drive (44) is disposed in the force flow between the input shaft (9) and the driven shaft (10), wherein a second input of the overriding drive (44) is coupled to the drivable and/or driven element (13).

15. Fitting control arrangement (1) having an actuator (2), wherein an output (4) of the actuator (2) is operatively connected to the input shaft (9) of a fitting switching device (8), and the fitting switching device (8) is designed as claimed in any one of the preceding claims.

## Revendications

1. Dispositif de commande d'armature (8), avec un arbre mené (10) et avec un arbre d'entrée (9) couplé à l'arbre mené (10), par lequel l'arbre mené (10) peut être entraîné en fonctionnement normal, et avec un entraînement de secours (11), dans lequel l'arbre mené (10) peut en outre être amené d'une position d'utilisation à une position finale par l'entraînement de secours (11), dans lequel un évidement (14) est formé sur un élément (13) du dispositif de commande d'armature qui peut être et/ou qui est entraîné par l'entraînement de secours (11) et dans lequel un élément d'arrêt (15) du dispositif de commande d'armature peut être déplacé avec un dispositif d'actionnement (16) du dispositif de commande d'armature au cours d'un mouvement d'actionnement d'une position débrayée hors de l'évidement (14) à une position engagée dans l'évidement (14), dans lequel l'évidement (14) présente au moins une face oblique (17, 18) bloquant l'élément d'arrêt (15) et ladite au moins une face oblique (17, 18) est orientée de telle manière qu'une force applicable avec l'entraînement de secours (11) à l'élément d'arrêt (15) dans la position engagée présente une composante (45) débrayant l'élément d'arrêt (15) hors de l'évidement (14),
**caractérisé en ce que** le dispositif d'actionnement (16) présente un ressort (38) qui soutient le mouvement d'actionnement du dispositif d'actionnement (16), de telle manière qu'une force additionnelle puisse être fournie pour le mouvement d'actionnement et dans lequel le ressort (38) peut être tendu par le transfert de l'élément d'arrêt (15) de la position engagée à la position débrayée.

2. Dispositif de commande d'armature (8) selon la revendication 1, **caractérisé en ce que** la face oblique (17, 18) décrit une ouverture s'évasant en direction de l'extrémité ouverte de l'évidement (14).

3. Dispositif de commande d'armature (8) selon la revendication 1 ou 2, **caractérisé en ce que** l'élément (13) qui peut être et/ou qui est entraîné est un élément rotatif et/ou **en ce que** la composante (45) est orientée radialement ou axialement par rapport à un axe de rotation (19) de l'élément (13) qui peut être et/ou qui est entraîné.

4. Dispositif de commande d'armature (8) selon l'une quelconque des revendications 1 à 3, **caractérisé en ce que** l'élément d'arrêt (15) est formé sur une ou par une bague extérieure (20) d'un roulement à billes (21).

5. Dispositif de commande d'armature (8) selon l'une quelconque des revendications 1 à 4, **caractérisé en ce que** l'élément d'arrêt (15) est formé à une extrémité libre (23) d'un levier articulé (24) et/ou **en ce que** le dispositif d'actionnement (16) agit sur une articulation mobile (27) du ou d'un levier articulé (24).

6. Dispositif de commande d'armature (8) selon la revendication 5, **caractérisé en ce qu'**il est formé un élément de butée (28) qui empêche un transfert du levier articulé (24) dans une position étendue.

7. Dispositif de commande d'armature (8) selon la revendication 5 ou 6, **caractérisé en ce que** le levier articulé (24) est articulé en un point d'appui (30) à position réglable et/ou **en ce que** la ou une extrémité libre (23) du levier articulé (24) est guidée dans une partie de boîtier (32).

8. Dispositif de commande d'armature (8) selon l'une quelconque des revendications 1 à 7, **caractérisé en ce que** le dispositif d'actionnement (16) présente un aimant de levage (33).

9. Dispositif de commande d'armature (8) selon la revendication 8, **caractérisé en ce qu'**un circuit électronique (37) pour la commande de l'aimant de levage (33) est formé et est conçu pour la fourniture d'un premier courant de bobine lors d'une attraction et d'un second courant de bobine abaissé par rapport à celui-là lors d'un maintien de l'aimant de levage (33).

10. Dispositif de commande d'armature (8) selon l'une quelconque des revendications précédentes, **caractérisé en ce que** le ressort (38) est détendu, lorsque l'élément d'arrêt (15) est transféré dans la position engagée, et/ou **en ce qu'**une force élastique du ressort (38) est dimensionnée de telle manière que l'élément d'arrêt (15) puisse être débrayé hors de l'évidement (14) contre la force élastique avec l'entraînement de secours (11) lorsque le dispositif d'actionnement (16) est inactif.

11. Dispositif de commande d'armature selon l'une quelconque des revendications 1 à 10, **caractérisé en ce que** le dispositif d'actionnement (16) présente un élément de poussoir (39) poussant directement ou indirectement l'élément d'arrêt (15), qui est fixé en position réglable sur une partie d'entraînement mobile (35) du dispositif d'actionnement (16).

12. Dispositif de commande d'armature (8) selon l'une quelconque des revendications 1 à 11, **caractérisé en ce qu'**il se trouve un élément de détection (41), en particulier un interrupteur de fin de course (42), avec lequel une atteinte et/ou une occupation de la position engagée peut être détectée.

13. Dispositif de commande d'armature (8) selon la revendication 12, **caractérisé en ce qu'**il se trouve un dispositif de connexion (43), qui est conçu pour une connexion logique d'un signal de sortie de l'élément de détection (42) avec un signal de surveillance du dispositif d'actionnement (16).

14. Dispositif de commande d'armature (8) selon l'une quelconque des revendications 1 à 13, **caractérisé en ce qu'**une transmission de superposition (44) est disposée dans le flux de force entre l'arbre d'entrée (9) et l'arbre mené (10), dans lequel une seconde entrée de la transmission de superposition (44) est couplée avec l'élément (13) qui peut être et/ou qui est entraîné.

15. Ensemble de commande d'armature (1) avec un servomoteur (2), dans lequel une sortie (4) du servomoteur (2) est en liaison active avec l'arbre d'entrée (9) d'un dispositif de commande d'armature (8) et le dispositif de commande d'armature (8) est réalisé selon l'une quelconque des revendications précédentes.
